Europäisches Patentamt

European Patent Office

Office européen des brevets

(19)

(11) Veröffentlichungsnummer: **0 105 209**
**B1**

# EUROPÄISCHE PATENTSCHRIFT

(12)

(45) Veröffentlichungstag der Patentschrift:
01.04.87

(51) Int. Cl.⁴: **G 01 B 9/00**

(21) Anmeldenummer: **83108684.8**

(22) Anmeldetag: **02.09.83**

(54) Optische Anordnung zur Erkennung und Auswertung der Lage eines Objekts.

(30) Priorität: **06.09.82 DE 3233013**

(43) Veröffentlichungstag der Anmeldung:
**11.04.84 Patentblatt 84/15**

(45) Bekanntmachung des Hinweises auf die Patenterteilung:
**01.04.87 Patentblatt 87/14**

(84) Benannte Vertragsstaaten:
**AT CH DE FR GB IT LI NL SE**

(56) Entgegenhaltungen:
**CH - A - 601 773**
**DE - A - 2 555 033**
**DE - A - 3 032 564**
**DE - A - 3 122 712**
**US - A - 3 175 089**
**US - A - 3 856 400**
**US - A - 3 977 789**
**US - A - 4 025 197**
**US - A - 4 191 477**

(73) Patentinhaber: **Siemens Aktiengesellschaft Berlin und München, Wittelsbacherplatz 2, D-8000 München 2 (DE)**

(72) Erfinder: **Marguerre, Hans-Helmut, Dipl.-Phys., Mähfeldstrasse 23, D-7541 Straubenhardt 4 (DE)**

## Beschreibung

Die Erfindung bezieht sich auf eine optische Anordnung zur Erkennung und Auswertung der Lage eines Objekts mittels mindestens einem optischen Sensor, mit einer Abbildungsoptik zwischen Objekt und Sensor, einer Auswerteelektronik, die dem optischen Sensor nachgeschaltet ist, und einem im Strahlengang zwischen Objekt und Sensor im Bereich einer Bildebene des Objekts angeordneten Rasterfilter mit periodisch verteilter Rasterstruktur.

Bei einer bekannten Anordnung dieser Art (DE-A 2 555 033) ist bei einer optischen Oberflächenprüfung ein Rasterfilter als Referenzstruktur für die Oberfläche im Strahlengang angeordnet. Hiermit kann eine mittlere Grobgestalt bzw. Welligkeit der Oberfläche mit einem entsprechenden Referenzraster untersucht werden. Die Auswertung erfolgt punktuell mit einzelnen fotoelektrischen Empfängern. Eine dreidimensionale Auswertung hinsichtlich Oberflächenbild und Abstand ist hier nicht angesprochen.

Bei einer anderen bekannten optischen Anordnung dieser Art (DE-A-30 21 448) wird die Lage und insbesondere die Oberflächenstruktur eines Objekts mittels einer Fernsehkamera und einer Auswerteelektronik erfasst. Zur genauen Analyse der Objektkonturen werden die durch eine spezielle Beleuchtung des Objekts erzeugten Kontrastunterschiede mittels der bekannten Anordnung elektronisch ausgewertet.

Weiterhin ist bekannt («Optoelektrisches Mess- und Sensorsystem», BBC-Nachrichten Heft 5/1980), eine Objektlageerkennung durch Vergleich des mit der Fernsehkamera erfassten Objektbildes mit einem Referenzbild vorzunehmen. Das Referenzbild kann entweder durch vorherige Abbildungen gespeichert oder frei in die Auswerteelektronik einprogrammiert sein.

Bei den bekannten Anordnungen müssten zur Auswertung einer dreidimensionalen Bildinformation unter Berücksichtigung der Objektentfernung zusätzliche Fernsehkameras bzw. eine Veränderung der Lage der einen Fernsehkamera während der Auswertung vorgesehen werden; weiterhin müsste die Auswerteelektronik dementsprechend erweitert werden.

Der Erfindung liegt die Aufgabe zugrunde, eine optische Anordnung zu schaffen, mit der die Erkennung und Auswertung der Lage eines Objekts auch hinsichtlich der Entfernung des Objekts und somit eine dreidimensionale Erkennung des Objekts mit einfachen Mitteln durchführbar ist.

Zur Lösung dieser Aufgabe ist bei einer optischen Anordnung der eingangs angegebenen Art der optische Sensor eine Fernsehkamera mit einer Sensorfläche, befindet sich das Rasterfilter im Bereich eines in der optischen Anordnung erzeugten Zwischenbildes des Objekts, wobei sich zwischen dem Zwischenbild und dem Objekt ein erstes Objektiv mit relativ grosser Blendenöffnung, am Ort des Zwischenbildes eine Feldlinse und zwischen dem Rasterfilter und der Fernsehkamera ein zweites Objektiv mit im Vergleich zum ersten Objektiv relativ kleiner Blendenöffnung befindet, und der Abstand des Rasterfilters einerseits zum Objekt sowie andererseits zur Fernsehkamera ist so bemessen, dass aus der Überlagerung der abgebildeten Objektkonturen mit der Rasterstruktur des Rasterfilters und dem Zusammenhang zwischen der Bildpunktverschiebung am Objekt und der Bildpunktverschiebung auf der Sensorfläche die Entfernung des Objekts zum optischen Sensor herleitbar ist.

Es ist für sich bereits bekannt, bei Fotoapparaten mit Objektbetrachtung durch das Objektiv (Spiegelreflexkameras) ein Mikroprismenraster als Schärfeindikator bzw. als Entfernungseinstellhilfe vorzusehen. An Bildstellen mit Helligkeitsübergängen entstehen dabei als Körnung zu bezeichnende periodische Bildstörungen, die nur bei exakter Entfernungseinstellung des Objektivs verschwinden. Bei der erfindungsgemässen optischen Anordnung wird in vorteilhafter Weise ein Rasterfilter, dessen Rasterstruktur dem Bild überlagert ist, zur Erleichterung der elektronischen Bildverarbeitung, beispielsweise für eine automatische Fertigungssteuerung mittels optischem Sensor, herangezogen. Mit diesem optischen Filterverfahren erscheinen die Informationen bezüglich Objektabstand und Drehlage von Objektkonturen in durch die Rasterstruktur codierter Form z.B. als Störung des Kantenbildes, im Fernsehbild. Im Vergleich zu den eingangs erwähnten bekannten Bildauswertesystemen besteht der Vorteil der erfindungsgemässen Anordnung darin, dass für die Erfassung von räumlichen Bildinformationen nur eine Kamera erforderlich ist und dass eine erhebliche Reduktion des Aufwandes bei der elektronischen Auswertung möglich ist. Mit Hilfe der Auswerteelektronik können aus den gestörten Konturen des Objekts bei der Abbildung auf einfache Weise Bildinformationen in Form von elektrischen Signalen ausgewertet werden, die die Lage des Objekts äusserst genau kennzeichnen. Weiterhin ist eine Reinigung des erfassten Bildes von störenden Strukturen oder die Bildung einer ortsabhängigen (entfernungsabhängigen) Schwelle bei der elektronischen Auswertung möglich.

Besonders vorteilhaft ist die erfindungsgemässe optische Anordnung, indem das Rasterfilter im Bereich eines in der optischen Anordnung erzeugten Zwischenbildes des Objekts angeordnet ist.

Die optische Anordnung ist in vorteilhafter Weise so gestaltet, dass sich zwischen dem Rasterfilter ein erstes Objektiv mit relativ grosser Blendenöffnung, am Ort des Zwischenbildes eine Feldlinse und zwischen dem Rasterfilter und der Sensorfläche ein zweites Objektiv mit relativ kleiner Blendenöffnung befindet.

Bei der erfindungsgemässen optischen Anordnung wirkt sich die Rasterstruktur des Rasterfilters im Bildsignal der Fernsehkamera in Gestalt von periodisch modulierten Bereichen in der Umgebung von Helligkeitsübergängen, z.B. im Bereich von Objektkanten, aus. Zwischen dem Abstand bzw. der Drehlage oder der Kantengeometrie des zu erfassenden Objekts und dem Ausmass der entsprechenden periodischen Bildstörung (modulierter Bereich) bestehen funktionale Zusammenhänge, die mittels der Auswerteelektronik ausgewertet werden können.

Weitere vorteilhafte Ausführungsformen sind in den Unteransprüchen angegeben.

Die Erfindung wird anhand der Figuren erläutert, wobei

Fig. 1 ein Ausführungsbeispiel eines Aufbaus der optischen Anordnung,

Fig. 2 Strahlengänge bei der Verwendung eines Prismenrasters als Rasterfilter und die

Fig. 3 bis 11 ausgewählte Oberflächenstrukturen des Rasterfilters darstellen.

Weiterhin zeigen die

Fig. 12 und 13 nicht unter die Erfindung fallende Ausführungsformen der optischen Anordnung mit je einem 45° zum Strahlengang geneigten Spiegel und die

Fig. 14 die Impulsverläufe während der Abtastung einer Zeile auf der Sensorfläche eines optischen Sensors.

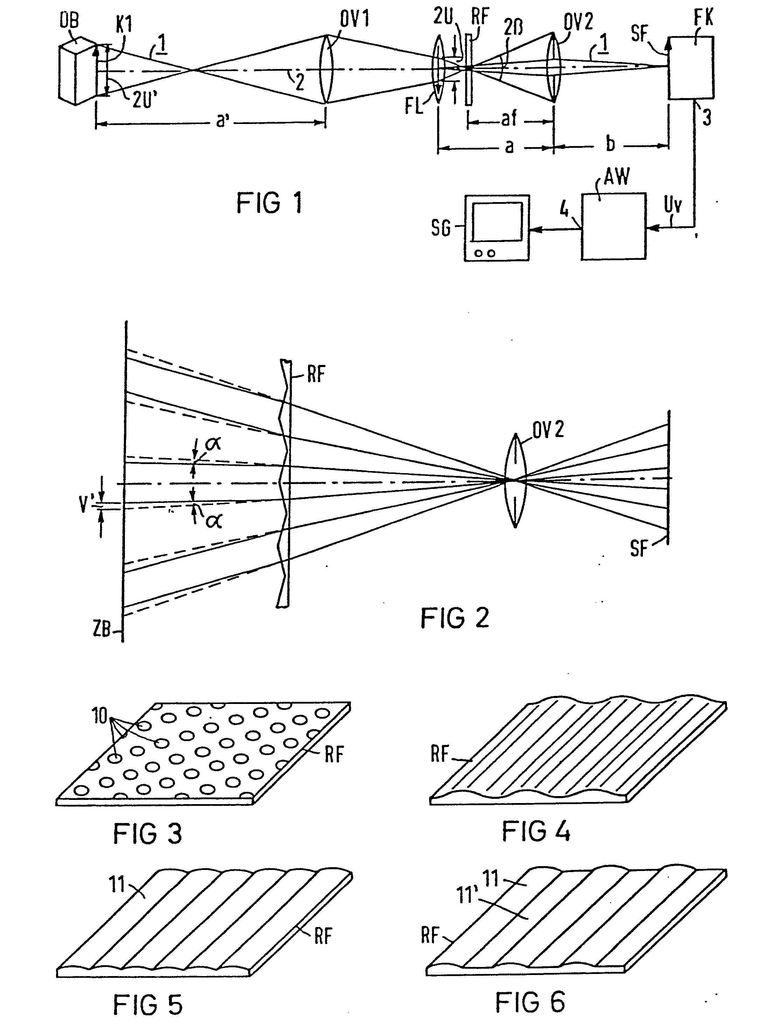

Bei dem in der Figur 1 dargestellten Ausführungsbeispiel ist ein zu beobachtendes Objekt OB vorhanden, das eine Kante K1 mit der Länge 2 U' aufweist, die u.a. mit der optischen Anordnung erkannt und ausgewertet werden soll. Die in der Figur 1 dargestellten Strahlenbündel 1, die sich entlang der optischen Achse 2 der optischen Anordnung ausbreiten, sind durch ein erstes Objektiv OV1 mit relativ grosser Blendenöffnung geführt, das in einem Abstand a' zum Objekt OB angeordnet ist. Im weiteren Verlauf des Strahlenbündels 1 ist eine Feldlinse FL im Bereich einer Zwischenbildebene der optischen Anordnung vorhanden, wobei die Zwischenabbildung der beschriebenen Kante des Objekts die Länge 2 U hat. Hinter der Feldlinse FL ist ein Rasterfilter RF angeordnet, das die hindurchtretenden Lichtstrahlen so beeinflusst, dass diese in einem Winkel 2 β wieder heraustreten. Zwischen dem Rasterfilter RF und einer Sensorfläche SF einer Fernsehkamera FK ist ein zweites Objektiv OV2 mit relativ kleiner Blendenöffnung angeordnet, so dass mit der gesamten Anordnung der Objektive eine scharfe Abbildung der Kante K1 des Objekts OB auf der Sensorfläche SF gewährleistet ist. Der Abstand vom Rasterfilter RF zum zweiten Objektiv OV2 ist mit af bezeichnet, der Abstand zwischen Feldlinse und zweitem Objektiv OV2 mit a, und der Abstand zwischen dem zweiten Objektiv OV2 und der Sensorfläche SF ist mit b bezeichnet. Das Ausgangssignal Uv (Videosignal) der Fernsehkamera FK am Ausgang 3 ist einer Auswerteelektronik AW zugeführt; das als Ergebnis der Auswertung gewonnene Signal ist vom Ausgang 4 der Auswerteelektronik AW auf ein Sichtgerät SG geführt.

In der Figur 2 ist ein detailliert gezeichneter Strahlenverlauf von der Zwischenbildebene ZB zur Sensorfläche SF der Fernsehkamera FK gezeigt. Die der Sensorfläche SF abgewandte Seite des Rasterfilters RF weist eine prismenförmige Struktur auf. Durch die prismenförmige Struktur werden die durch das Rasterfilter RF hindurchtretenden Lichtstrahlen um den Winkel α abgelenkt. Diese Ablenkung bewirkt eine Verschiebung von abzubildenden Objektpunkten um v'.

Die optische Anordnung nach dem in der Figur 1 und der Figur 2 dargestellten Ausführungsbeispiel weist zwei Abbildungsstufen auf (Zwischenbild und Abbildung auf der Sensorfläche SF), wobei die Feldlinse FL im Bereich des Zwischenbildes die Objektivöffnungen der beiden Objektive OV1 und OV2 ineinander abbildet. Für die Funktion des Rasterfilters RF in der Nähe des Zwischenbildes ZB ist es erforderlich, dass das erste Objektiv OV1 eine grosse Öffnung und das zweite Objektiv OV2 eine kleine Blendenöffnung hat. Wie in der Figur 1 dargestellt, lässt das zweite Objektiv OV2 nur einen kleinen Teil der vom ersten Objektiv OV1 gelieferten Lichtbündel passieren. Geht man davon aus, dass entsprechend der Bildpunktverschiebung v' am Objekt OB eine entsprechende Bildpunktverschiebung v auf der Sensorfläche SF angenommen werden kann, so ergibt sich der mathematische Zusammenhang für die Bildpunktverschiebung v folgendermassen (vergleiche Figur 1 und Figur 2):

$$v = b \cdot tg\alpha \left(1 - \frac{af}{a}\right) \text{ für } a \geq af \tag{1}$$

Die Abbildungsgleichung für das erste Objektiv OV1 ist mit f1 als Mass für die Brennweite dieses Objektivs

$$\frac{1}{f1} = \frac{1}{a} + \frac{1}{a'}; \; a = \frac{a' \, f1}{a' - f1} \tag{2}$$

Setzt man die Gleichung (2) in Gleichung (1) ein, so ergibt sich:

$$v = b \cdot tg\alpha \left(1 - \frac{af}{f1} + \frac{af}{a'}\right), \text{ für } \alpha \leq \beta \tag{3}$$

Bei der Aufstellung dieser Gleichungen ist davon ausgegangen, dass das Zwischenbild nur geringfügig aus dem Bereich der Feldlinse entfernt ist. Der durch das Rasterfilter RF erzeugbare Winkelbereich 2 α (vergleiche Figur 2) wird hierbei durch den von der Blendenöffnung des ersten Objektivs OV1 bestimmten Winkel 2 β begrenzt, wobei dem Winkelbereich 2 β ein Abbildungsbereich 2 U definiert ist, der beim dargestellten Ausführungsbeispiel der Kante K1 des Objekts OB zugeordnet ist.

Auf die Auswertung der auf der Sensorfläche SF abgebildeten Objektkonturen unter Berücksichtigung der durch das Rasterfilter RF hervorgerufenen Objektverschiebung v wird anhand der noch zu erläuternden Figuren eingegangen.

Anhand der Figuren 3 bis 11 sind verschiedene Oberflächenstrukturen des Rasterfilters RF dargestellt, die die anhand der Figur 1 und 2 be

schriebenen Beeinflussungen der Strahlengänge bewirken. Beim Rasterfilter nach der Figur 3 sind eine Anzahl Linsen oder Streuscheiben 10 periodisch auf dem Rasterfilter RF verteilt.

Beim in der Figur 4 dargestellten Ausführungsbeispiel des Rasterfilters RF ist die Oberfläche sinusförmig gewölbt.

Die Wölbung der Oberfläche des Rasterfilters nach der Figur 5 ist in Form von Zylinderlinsen 11 ausgeführt, die auf der Oberfläche parallel zueinander angeordnet sind. Bei der Oberflächenstruktur nach der Figur 6 sind zwischen den Zylinderlinsen 11 ebene Flächen 11' belassen.

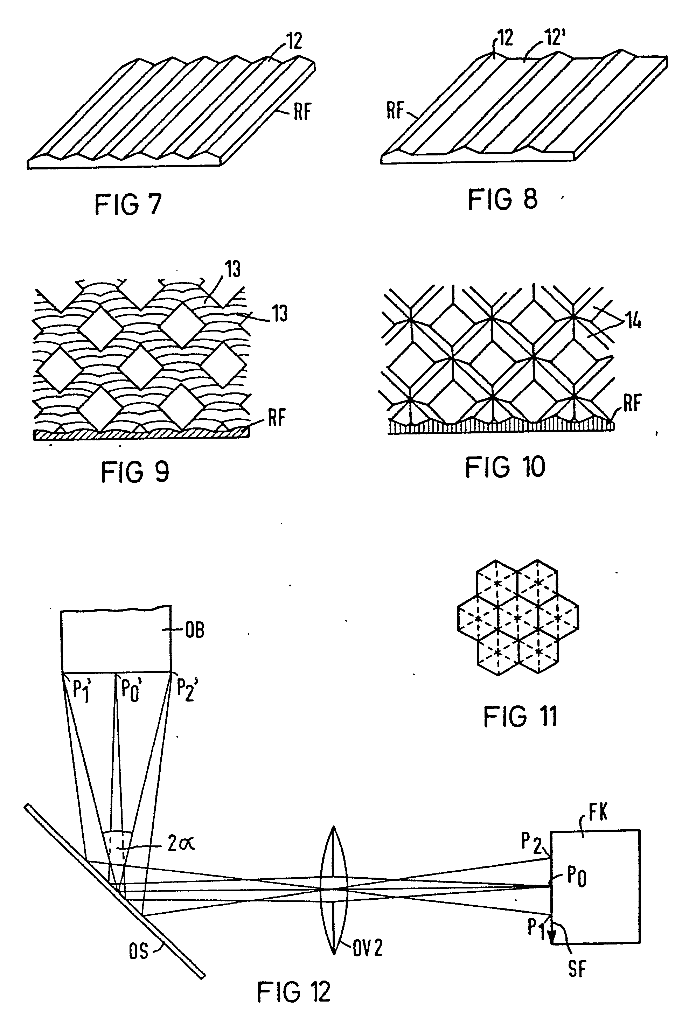

Die Oberflächenstruktur nach der Figur 7 besteht aus parallel nebeneinander angeordneten Stufen 12 (Primen) mit einer vorgegebenen Schräge. In der Figur 8 sind die gleichen Stufen 12 mit dazwischenliegenden ebenen Bereichen 12' vorhanden.

Figur 9 zeigt eine Draufsicht auf ein weiteres Ausführungsbeispiel einer Oberfläche des Rasterfilters RF, das aus gekreuzt zueinander angeordneten Zylinderlinsen 13 besteht.

Die Figur 10 zeigt eine Draufsicht auf ein gekreuztes Prismenraster mit Prismenelementen 14, und die Figur 11 zeigt ein schematisch dargestelltes hexagonales Prismenraster. Die Rasterfilter nach den dargestellten Ausführungsbeispielen (Figur 3 bis 11) beeinflussen den Strahlengang vom Objekt OB zur Sensorfläche SF in vergleichbarer Weise, wie es anhand der Figur 2 beschrieben ist.

In der Figur 12 ist ein nicht unter die Erfindung fallendes Ausführungsbeispiel der optischen Anordnung dargestellt, bei dem das Rasterfilter durch eine besonders ausgestaltete Spiegelfläche eines Oberflächenspiegels OS gebildet ist. Durch unterschiedlich verteiltes Reflexionsvermögen in bezug auf die Reflexionsrichtung weist der Oberflächenspiegel OS auf seiner Spiegelfläche eine Rasterstruktur auf, die in gleicher Weise wie bei den vorhergehend beschriebenen Beispielen in bestimmten Bereichen des Strahlengangs eine Beeinflussung, beispielsweise um den Winkelbereich 2 α, hervorrufen. Zur Verdeutlichung ist in der Figur 12 die Abbildung von Punkten $P_0'$, $P_1'$ und $P_2'$ des Objekts OB mit den entsprechenden Lichtbündeln auf der Sensorfläche SF der Fernsehkamera FK mit den Punkten $P_0$, $P_1$, $P_2$ dargestellt.

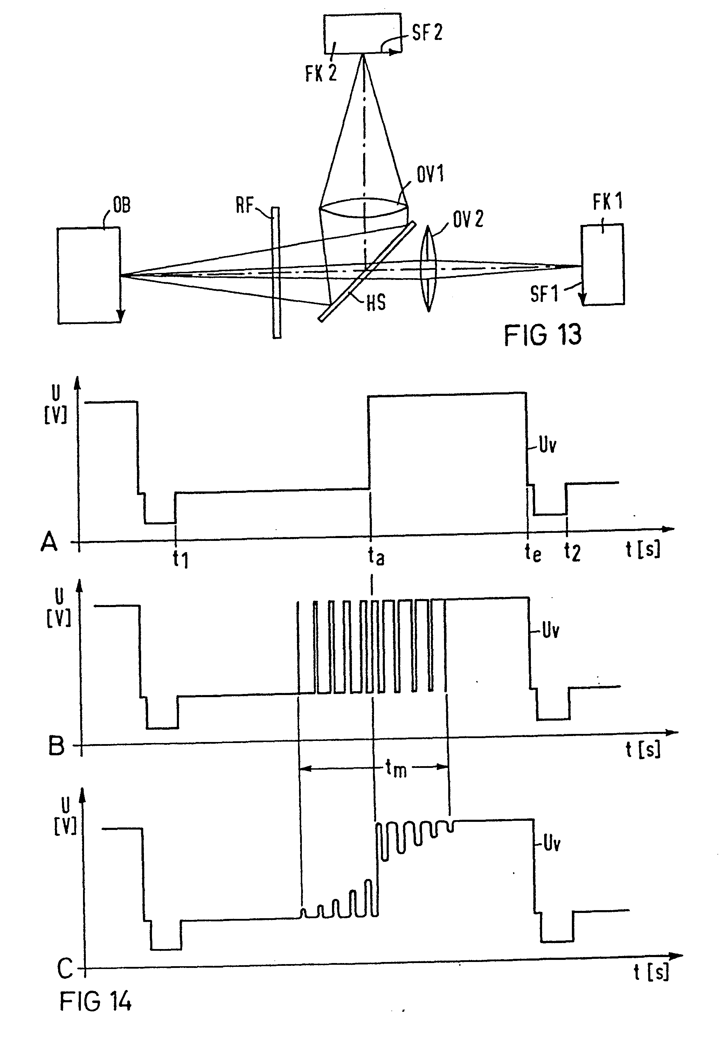

Das nicht unter die Erfindung fallende Ausführungsbeispiel der optischen Anordnung nach der Figur 13 enthält zwei Fernsehkameras FK1 und FK2 mit entsprechenden Sensorflächen SF1 und SF2, wobei im Strahlengang zwischen dem Objekt OB und der Sensorfläche SF2 ein halbdurchlässiger Spiegel HS angeordnet ist, der im Winkel von 45° zu diesem Strahlengang liegt. Das Rasterfilter RF bewirkt bei diesem Ausführungsbeispiel nur in der Abbildung auf der Sensorfläche SF1 eine Bildstörung; in der Abbildung auf der Sensorfläche SF2 entstehen wegen der Unscharfabbildung der Rasterstruktur bei grosser Blendenöffnung des Objektivs OV1 nur Bildstörungen mit geringer Amplitude. Die Bemessung und die Anordnung der Objektive OV1 und OV2 ist hier so gewählt, dass eine Scharfabbildung der Rasterstruktur des Rasterfilters RF in der Fernsehkamera FK1 und eine Unscharfabbildung der Rasterstruktur in der Fernsehkamera FK2 erfolgt. Mit der optischen Anordnung nach diesem Ausführungsbeispiel kann eine besonders hohe Auflösung bei der Objektabbildung erreicht werden, da eine zusätzliche Abbildung des Objekts ohne grosse Beeinflussung durch das Rasterfilter erreichbar ist. Die Ausgangssignale der weiteren Fernsehkameras FK1 und FK2 können ebenfalls in der Auswerteelektronik AW ausgewertet werden.

In der Figur 14 sind Diagramme von Spannungsverläufen des Videosignals Uv während der Abtastung einer Zeile mittels der Fernsehkamera FK (vergleiche insbesondere Figur 1 bzw. Figur 2) dargestellt. Die Abtastung erfolgt hier parallel zu der in der Figur 2 dargestellten Ebene. Der Spannungsverlauf des Videosignals Uv während einer Zeile über der Zeit t ist im Bereich zwischen $t_1$ und $t_2$ (Zeilenanfang und Zeilenende) dargestellt. Hier ist davon ausgegangen, dass zwischen Zeitpunkten $t_a$ und $t_e$ die Fläche eines zu beobachtenden Objekts OB detektiert wird. Im Teil A der Figur 14 ist der Verlauf der Spannung Uv bei einer Detektion ohne Rasterfilter RF gezeigt. Im Teil B der Figur ist davon ausgegangen, dass ein Rasterfilter RF mit einem Sinus- oder Zylinderlinsenraster in den Strahlengang eingefügt ist (vergleiche Figur 4 bis 6). Durch ein Rasterfilter RF dieser Ausführungsform bildet sich somit symmetrisch um die Flanke bei $t_a$ (Objektkante bzw. Helligkeitsschwankung) eine periodische Bildstörung aus, deren Zeitdauer $t_m$ beträgt. Würde hier ein Rasterfilter mit einer Prismenrasterstruktur verwendet werden (vergleiche Figur 2), so liessen sich gleiche Impulsbreiten der Einzelimpulse während der Zeitspanne $t_m$ erreichen. Im Teil C der Figur 14 ist der Spannungsverlauf Uv bei einer Verwendung eines Rasterfilters mit Streuelementen (vergleiche Figur 3) dargestellt, bei dem eine Abnahme der Amplituden bei zunehmender Entfernung von der Kante ($t_a$) feststellbar ist.

Bei den Spannungsverläufen nach der Figur 14 ist davon ausgegangen, dass die Objektkante (beispielsweise Kante K1 aus der Figur 1) senkrecht zur Zeilenabtastrichtung verläuft. Für den Fall, dass die Objektkante zur Abtastrichtung geneigt ist, erstreckt sich die Störung bei der Zeilenabtastung über einen weiteren Bereich, so dass aus der zeitlichen Grösse der Störung auch eine Bestimmung der Drehlage des Objekts möglich ist.

Die Verwendung von Rasterfiltern RF mit anderen Rasterstrukturen, wie sie beispielsweise in den Figuren 7 bis 11 noch angegeben sind, führen zu Bildstörungen an Objektkanten nach vergleichbaren Gesetzmässigkeiten und können je nach Art des zu beobachtenden Objektes optimal angepasst werden. Beispielsweise können durch die Verwendung geeigneter Rasterfilter Impulsverläufe an Objektkanten hergestellt werden, die zur Erkennung einer ortsabhängigen (entfernungsabhängigen) Schwelle geeignet sind. Somit kann aus dem Erreichen einer bestimmten Impulsamplitude bzw. Impulslänge der Einzelimpulse die Entfernung des Objekts zur Sensorfläche der Fernsehkamera ermittelt werden.

## Patentansprüche

1. Optische Anordnung zur Erkennung und Auswertung der Lage eines Objekts mittels mindestens einem optischen Sensor, mit
- einer Abbildungsoptik zwischen Objekt (OB) und Sensor,
- einer Auswerteelektronik (AW), die dem optischen Sensor nachgeschaltet ist, und
- einem im Strahlengang zwischen Objekt (OB) und Sensor im Bereich einer Bildebene des Objekts (OB) angeordneten Rasterfilter (RF) mit periodisch verteilter Rasterstruktur, dadurch gekennzeichnet, dass
- der optische Sensor eine Fernsehkamera mit einer Sensorfläche (SF) ist,
- sich das Rasterfilter (RF) im Bereich eines in der optischen Anordnung erzeugten Zwischenbildes (ZB) des Objekts (OB) befindet, wobei
- sich zwischen dem Zwischenbild (ZB) und dem Objekt (OB) ein erstes Objektiv (OV1) mit relativ grosser Blendenöffnung, am Ort des Zwischenbildes (ZB) eine Feldlinse (FL) und zwischen dem Rasterfilter (RF) und der Fernsehkamera (FK) ein zweites Objektiv (OV2) mit im Vergleich zum ersten Objektiv relativ kleiner Blendenöffnung befindet, und dass
- der Abstand des Rasterfilters einerseits zum Objekt (OB) sowie andererseits zur Fernsehkamera so bemessen ist, dass aus der Überlagerung der abgebildeten Objektkonturen mit der Rasterstruktur des Rasterfilters (RF) und dem Zusammenhang zwischen einer Bildpunktverschiebung (v') am Objekt und einer Bildpunktverschiebung (v) auf der Sensorfläche die Entfernung des Objekts (OB) zum optischen Sensor herleitbar ist.

2. Anordnung nach Anspruch 1, dadurch gekennzeichnet, dass sich das Rasterfilter (RF) in geringem Abstand in Richtung zum Objekt (OB) vor dem Zwischenbild (ZB) befindet.

3. Anordnung nach Anspruch 1, dadurch gekennzeichnet, dass sich das Rasterfilter (RF) in geringem Abstand in Richtung zum Objekt (OB) hinter dem Zwischenbild (ZB) befindet.

4. Anordnung nach einem der Ansprüche 1 bis 3, dadurch gekennzeichnet, dass auf der Oberfläche des Rasterfilters (RF) periodisch verteilte Linsen (10, 11) angeordnet sind.

5. Anordnung nach einem der Ansprüche 1 bis 3, dadurch gekennzeichnet, dass das Rasterfilter (RF) eine Streuscheibe mit einer periodischen Anordnung von Öffnungen (10) ist.

6. Anordnung nach einem der Ansprüche 1 bis 3, dadurch gekennzeichnet, dass die Oberfläche des Rasterfilters (RF) quer zum Strahlengang sinusförmig gewölbt ist.

7. Anordnung nach einem der Ansprüche 1 bis 3, dadurch gekennzeichnet, dass auf der Oberfläche des Rasterfilters (RF) periodisch verteilte Prismen (12, 13, 14) angeordnet sind.

## Claims

1. An optical arrangement which serves to recognise and analyse the position of an object by means of at least one optical sensor, comprising
- a focussing optical system between the object (OB) and the sensor,
- an electronic analysis unit (AW) connected to the output of the optical sensor and
- a grid filter (RF) which has a periodically-distributed grid structure arranged in the beam path between the object (OB) and the sensor in the region of an image plane of the object (OB) characerised in that
- the optical sensor is a television camera which has a sensor surface (SF);
- the grid filter (RF) is arranged in the region of an intermediate image (ZB) of the object (OB) produced in the optical arrangement; where
- a first objective (OV1) which has a relatively large diaphragm opening is arranged between the intermediate image (ZB) and the object (OB), a field lens (FL) is arranged at the location of the intermediate image (ZB), and a second objective (OV2) which has a relatively small diaphragm opening in comparison to the first objective is arranged between the grid filter (RF) and the television camera (FK); and that
- the distance between the grid filter and the object (OB) on the one hand and the television camera on the other hand is such that the distance of the object (OB) from the optical sensor can be deduced from the superimposition of the focussed object contours on the grid structure of the grid filter (RF) and from the inter-relationship between a shift of image point (V') on the object and a shift of image point (V) on the sensor surface.

2. An arrangement as claimed in Claim 1, characterised in that the grid filter (RF) is arranged at a short distance in front of the intermediate image (ZB) in the direction of the object (OB).

3. An arrangement as claimed in Claim 1, characterised in that the grid filter (RF) is arranged at a short distance behind the intermediate image (ZB) in the direction of the object (OB).

4. An arrangement as claimed in one of Claims 1 to 3, characterised in that a periodic distribution of lenses (10, 11) is arranged on the surface of the grid filter (RF).

5. An arrangement as claimed in one of Claims 1 to 3, characterised in that the grid filter (RF) is a diffusing disc containing a periodic arrangement of openings (10).

6. An arrangement as claimed in one of Claims 1 to 3, characterised in that the surface of the grid filter (RF) is curved sinusoidally transversely to the beam path.

7. An arrangement as claimed in one of Claims 1 to 3, characterised in that a periodic distribution of prisms (12, 13, 14) is arranged on the surface of the grid filter (RF).

## Revendications

1. Dispositif optique pour reconnaître et évaluer la position d'un objet à l'aide d'au moins un capteur optique, comportant
–un système optique de formation d'images situé entre l'objet (OB) et le capteur,
– un dispositif électronique d'évaluation (AN), qui est branché en aval du capteur optique, et
– un filtre à réseau (RF) disposé entre l'objet (OB) et le capteur au voisinage d'un plan-image de l'objet (OB) et possédant une structure de réseau à répartition périodique, caractérisé par le fait que
– le capteur optique est une caméra de télévision comportant une surface de détection (SF),
– le filtre à réseau (RF) est situé au voisinage d'une image intermédiaire (ZB) de l'objet (OB), produite dans le dispositif optique, auquel cas
– un premier objectif (OV1) possédant une ouverture de diaphragme relativement grande est situé entre l'image intermédiaire (ZB) et l'objet (OB), une lentille de champ (FL) est située à l'emplacement de l'image intermédiaire (ZB) et un second objectif (OV2) possédant une ouverture de diaphragme relativement faible par rapport au premier objectif est situé entre le filtre à réseau (RF) et la caméra de télévision (FK), et que
– les distances du filtre à réseau d'une part par rapport à l'objet (OP) et d'autre part par rapport à la caméra de télévision sont dimensionnées de telle sorte que l'on peut obtenir la distance de l'objet (OB) par rapport au capteur optique à partir de la superposition de l'image des contours de l'objet avec la structure du réseau du filtre à réseau (RF) et à partir de la relation entre un décalage ($v'$) d'un point d'image sur l'objet et un décalage ($v$) d'un point d'image sur la surface de détection.

2. Dispositif suivant la revendication 1, caractérisé par le fait que le filtre à réseau (RF) est situé en direction de l'objet (OB), à une faible distance en avant de l'image intermédiaire (ZB).

3. Dispositif suivant la revendication 1, caractérisé par le fait que le filtre à réseau (RF) est situé, en direction de l'objet (OB), à une faible distance en arrière de l'image intermédiaire (ZB).

4. Dispositif suivant l'une des revendications 1 à 3, caractérisé par le fait que des lentilles (10, 11) réparties de façon périodique sont disposées sur la surface du filtre à réseau (RF).

5. Dispositif suivant l'une des revendications 1 à 3, caractérisé par le fait que le filtre à réseau (RF) est un verre diffusant comportant des ouvertures (10) disposées selon un arrangement périodique.

6. Dispositif suivant l'une des revendications 1 à 3, caractérisé par le fait que la surface du filtre à réseau (RF) est cintrée avec une forme sinusoïdale transversalement par rapport au trajet du rayonnement.

7. Dispositif suivant l'une des revendications 1 à 3, caractérisé par le fait que des prismes (12, 13, 14) répartis de façon périodique sont disposés sur la surface du filtre à réseau (RF).

0 105 209

FIG 1

FIG 2

FIG 3

FIG 4

FIG 5

FIG 6

7

FIG 7

FIG 8

FIG 9

FIG 10

FIG 11

FIG 12

FIG 13

FIG 14